# EUROPEAN PATENT SPECIFICATION

(11) **EP 1 395 706 B1**
(45) Date of publication and mention of the grant of the patent: **07.11.2007**
(21) Application number: 02740690.9
(22) Date of filing: 05.06.2002
(51) Int. Cl.: D21H 27/30, B32B 29/00

(54) **MULTI-PLY TISSUE PAPER PRODUCT AND METHOD FOR PRODUCING SAME**
MEHRLAGIGE TISSUEPAPIERE UND VERFAHREN ZUR HERSTELLUNG
PAPIER DE SOIE MULTIJETS ET PROCEDE DE PRODUCTION ASSOCIE

(30) Priority: 15.06.2001 GB 0114680
(43) Date of publication of application: 10.03.2004
(73) Proprietor: SCA Hygiene Products GmbH, 68305 Mannheim (DE)
(72) Inventor: MÜLLER, Heinz-Jürgen, 68623 Lampertheim (DE)
(74) Representative: HOFFMANN EITLE
(86) International application number: PCT/EP2002/006179
(87) International publication number: WO 2002/103112

(56) References cited:
- WO-A-99/45205
- US-A- 3 650 882
- US-A- 3 953 638
- US-A- 3 961 119
- US-A- 4 100 017
- US-A- 5 382 464
- US-A- 5 736 223

## Description

### Field of the invention

The invention relates to a multi-ply tissue paper product comprising at least three structured plies of paper and a method for producing same.

Multi-ply tissue paper for various uses as a kitchen paper, toilette paper or handkerchief involves a plurality of plies of paper which are bonded together to form a multi-ply paper.

General goals with respect to multi-ply paper are to provide softness, an improved feel, good mechanical strength and the desired absorption properties.

### Description of the prior art

In multilayer products, tissue plies can be structured by different methods. A first method for providing a structured ply of paper is the use of a TAD (through air drying) process, which gives the paper a three-dimensional structure already in the paper machine.

A further method involves the embossing of tissue using a single nip or multi-nip embossing. The ply bonding of the single plies is provided by a mechanical embossing or by using an adhesive. In the case of three or multi-ply products, a plurality of plies are generally embossed together to provide a volume to the product. However, the embossing usually hardens the product and contributes to a rough feeling of the product. On the other hand, it is possible to use a micro embossing with a high density of protuberances of more than 40 protuberances/cm². A micro embossed product feels soft. However, micro embossed paper feels as if it could not absorb enough liquid.

Therefore, there is a constant desire to provide a tissue product with a high softness surface and a sufficient bulk.

WO 99/45205 describes a multi-ply tissue product with two embossed outer plies and a middle ply without embossing. The outer plies are embossed so that the protuberances are arranged with a density of more than 30 protuberances/cm². Each of the outer plies is glue bonded to the middle ply.

US 5, 382, 464, US 5,736,223 and US 3,650 882 all relate to specific nested configurations of a three-ply, embossed paper. The multi-ply paper according to US 5,736,223 is composed of two external plies the embossing protuberances of which are arranged in a foot-to-foot configuration. A third embossed middle ply is provided, the embossing protuberances of which nest between the protuberances of one of the two external plies.

US 5,382,464 uses a different approach by providing embossed plies having protuberance of two different heights wherein the protuberances having a greater height alternate with more shallow protuberances. When the embossed ply is used to form a multi-ply paper, the small protuberances are arranged in a foot-to-foot configuration with the protuberances of a second embossed ply, so that the big protuberances of the first ply are positioned to nest between the protuberances of the second ply.

### Summary of the invention

It is the object of the invention to provide a multi-ply tissue paper which combines in an advantageous way a high softness and a necessary bulk to provide a good feeling to the user. Moreover, the product should be appealing to the eye.

This object is solved by a multi-ply tissue paper with the features of claim 1. The method for producing such a multi-ply tissue paper is characterized by the features of claim 13.

The invention resides in the provision of at least three embossed plies of paper. Both outer plies are provided with a microstructure pattern with protuberances with a density (concentration) of more than 40 protuberances per cm². At least one middle ply sandwiched between the outer plies is provided with a third structure pattern being an embossing pattern with a density of the protuberances of less than 40 protuberances per cm². By bonding the outer, microstructured plies and the embossed middle ply together, the resulting multi-ply tissue paper combines soft outer plies and a volume producing middle ply. The resulting tissue paper combines the advantages of high softness, a high volume and a good ply bonding. Due to the volume generating embossing of the middle ply, there is a considerable saving of fibres which contributes to the cutting down of the production costs.

The method of producing a multi-ply tissue paper comprises the steps of structuring a first outer ply with a first microstructure pattern which has a first density of protuberances, the structuring of a second outer ply with a second microstructure pattern with a second density of the embossed protuberances and the embossing of a middle ply with a third structure pattern being an embossing pattern. Whereas the first and second pattern has a density of more than 40 protuberances per cm², the third pattern has a density of less than 40 protuberances per cm². When combining together the three plies so that the third pattern is in an unregistered way, the middle ply imparts volume to the multi-ply tissue whereas the two outer plies with the microstructure pattern contribute to the softness of the product.

Preferred embodiments of the invention are characterized by the dependent claims.

According to a first preferred embodiment, the first protuberances of the first microstructure pattern have a first height h1 and the second protuberances of the second microstructure pattern have a second height h2, wherein the protuberances of the third structure pattern have a height H which is at least 1.3 times greater than h1 and h2, respectively, preferably at least 1.5 times greater and most preferably at least 2.0 times greater than h1 and h2. This is a further measure to impart bulk to the middle ply and to a multi-ply tissue paper product.

Preferably, the first outer ply has a fourth structure pattern, preferably an embossing pattern with forth protuberances having essentially the same height as the first protuberances of the first microstructure pattern. These fourth protuberances can be arranged so that a décor pattern is formed which is appealing to the eye of the user. The same is possible for the second outer ply which can have a fifth structure pattern, preferably an embossing pattern with protuberances having essentially the same height as the second protuberances of the second microstructure pattern. It is possible to provide a free combination of multi-ply tissue paper with a décor pattern on one or both outer surfaces. The fourth and fifth structure pattern can be essentially identical or can be different.

According to preferred embodiment of the invention, the ply bonding is generated by glue lamination using a lamination pattern. The height of the lamination pattern must be the sum of he individual heights of the microstructure pattern of the outer plies (h1+h2) and the height of the third pattern (H). This ply bonding technique using a separate lamination pattern can be used to provide a design lamination to the product. It is possible to use e.g. discreet design lamination dots which are arranged to resemble the shape of a desired design like a flower. In order to provide a good ply bonding in the inventive multi-ply tissue paper, the glue lamination is preferably deep embossed to provide a sufficient ply bonding despite of the volume embossed middle ply.

The adhesives used can be all adhesives usually used in the art, e.g. starch or polyvinylalcohol.

According to an alternative embodiment of the invention, the ply bonding is generated by a mechanical ply bonding technique. Such a mechanical ply bonding technique could be the pressing of the multi-ply tissue with some small protrusions on a roller, like needle-tips. These protrusions run with high pressure against a suitable anvil roller. This pressing provides for a ply bonding between the individual tissue paper plies. An example for such a mechanical ply bonding is edge embossing.

According to preferred embodiment of the invention, the fourth and/or fifth protuberances have an elongate shape. With such an elongate shape it is possible to provide a design pattern which is easier discernible for a user and, thus, more complicated designs can be provided on the same scale of the design pattern compared to the use of single dots to generate a design pattern.

However, the alternative use of fourth and/or fifth protuberances with a dot-like-shape is also possible if these protuberances are arranged in a way to form an aesthetic pattern.

According to preferred embodiments of the inventive method, the step of combining together the three plies so that the protuberances lie in an unregistered way can be carried out by first combining the first outer ply and the middle ply to a combined tissue web, the applying of a laminating agent to the combined tissue web and the marrying of the combined tissue web and the second outer ply. As outlined above, the lamination can be provided according to a preferred embodiment of the invention using a design pattern of lamination dots.

For all above described embodiments, at least one of the first and second outer plies is micro-embossed. Alternatively, one of the first and second outer plies is structured by a TAD process. In other words, all combinations of outer plies which are structured by a TAD process or micro-embossed are within the scope of the invention.

### Brief description of the drawings

In the following, the invention is described, by way of example only, with reference to the accompanying drawings, in which:
- Figs. 1a to 1d: are diagrammatic illustrations of a tissue paper product according to a first embodiment of the invention, wherein Figs. 1b, 1c and 1d show the outer ply, middle ply and inner ply, respectively and Fig. 1a is a cross-sectional view of the three-ply tissue product along the lines A-A in Figs. 1b to 1d;
- Fig. 2: is a schematic representation of a paper converting device for producing the multi-ply tissue paper product according to Fig. 1;
- Figs. 3a to 3d: are diagrammatic illustrations of a tissue paper product according to a second embodiment of the invention, wherein Figs. 3b, 3c and 3d show the outer ply, middle ply and inner ply, respectively and Fig. 3a is a cross-sectional view of the three-ply tissue product along the lines B-B in Figs. 3b to 3d;
- Fig. 4: is a schematic representation of a paper converting device for producing the multi-ply tissue paper product according to Fig. 3;
- Figs. 5a to 5d: are diagrammatic illustrations of a tissue paper product according to a third embodiment of the invention, wherein Figs. 5b, 5c and 5d show the outer ply, middle ply and inner ply, respectively and Fig. 5a is a cross-sectional of the three-ply tissue product along the lines C-C in Figs. 5b to 5d;
- Fig. 6: is a schematic representation of a paper converting device for producing the multi-ply tissue paper product according to Fig. 5.

### Detailed description of preferred embodiments

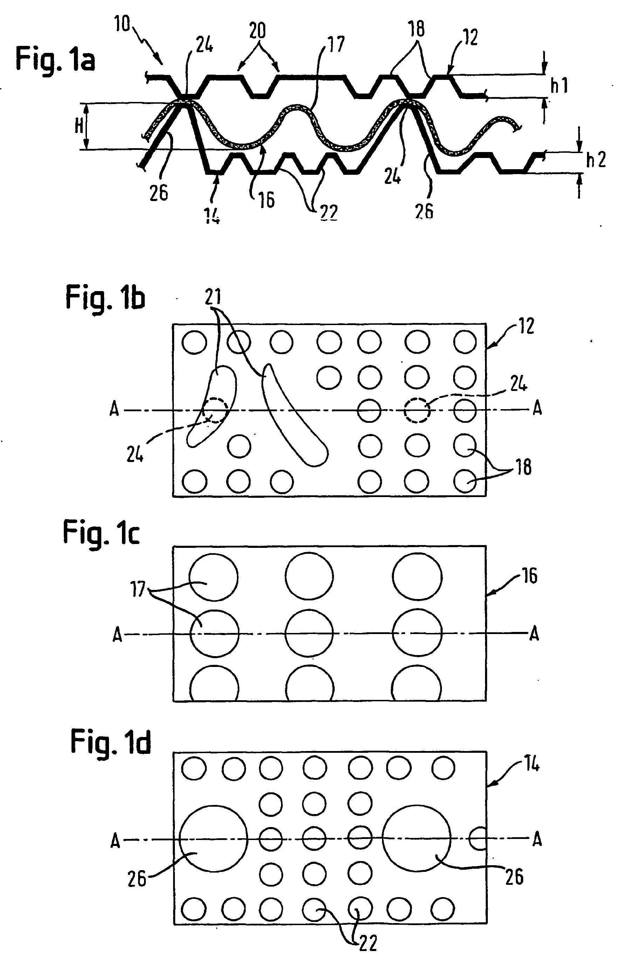

In the following description of preferred embodiments of the invention, corresponding parts or elements in the different drawings will be denoted by the same reference numerals. In the schematic drawings according to Fig. 1a, 3a and 5a, the heights of the protuberances were selected to clarify the invention and are not drawn to scale.

In the following embodiments, the outer plies are micro-embossed. However, it should be apparent to those skilled in the art that it is also possible to structure one or both outer plies using a TAD process.

Figs. 1a to 1d describe a first embodiment of a three ply tissue paper product which can be used as a toilet paper, a kitchen roll or a handkerchief. However, the use of the multi-ply tissue paper is not limited to these exemplified uses. Same applies to the number of plies in all exemplified embodiments which is not limited to three. If it is desired to provide more bulk it is easily possible to add one or more further volume embossed middle plies to the product.

Fig. 1b shows the first outer ply from above, whereas Fig. 1d shows the second outer ply from below.

In the embodiment according to Fig. 1a, there are first and second outer plies which, in the product 10 according to Fig. 1a, are the first outer ply 12 and the second outer ply 14.

Between the first outer ply 12 and the second outer ply 14 there is sandwiched a middle ply 16, the protuberances of which are not in registration with the protuberances of the first outer ply 12 and the second outer ply 14. The first outer ply 12 and the second outer ply 14 are also combined so that a random configuration of the micro embossing pattern described later on the first outer ply 12 and the second outer ply 14 results.

As can be best seen from Figs. 1a and 1b, the first outer ply 12 is provided with a first micro embossing pattern 18 in the shape of little protrusions having a height h1 of between 0.1 and 1.5 mm, and more preferably between 0.1 to 1.0 mm. The density of the protuberances of the first micro embossing pattern 18 is greater than 40 protuberances/cm², preferably greater than 60 protuberances/cm².

The first outer ply 12 is additionally provided with a graphic embossing pattern 21 having the same heights h1 as the first micro embossing pattern 18. The graphic embossing pattern 21 can either be formed by elongate protuberances which act as a line or by discrete dot-like protuberances which are assembled to form an aesthetic pattern.

The second outer ply 14 (see also Fig. 1d) is provided with a second micro embossing pattern 22 having a height h2 which can be different to the height h1. In any case, the height h2 is preferably between 0.1 and 1.5 mm and, preferably between 0.1 and 1.0 and therefore, in the same range as the height h1. The second outer ply 14 could also have an additional embossing pattern.

In the example according to Figs. 1a, 1d, the second outer ply 14 is not provided with an additional graphic embossing pattern. The micro embossing pattern of the second outer ply 14 has a density of the protuberances of greater than 40 protuberances/cm² and preferably greater than 60 protuberances/cm².

The middle ply 16 according to Fig. 1c is also provided with an embossing. The embossing with a height H has a big embossing pattern 17 with a density of the protuberances of less than 40 protuberances per cm2.

The height H ranges between 0.3 and 3.0 mm and preferably between 0.7 and 2.5 mm.

In a preferred embodiment of the invention, the volume embossing of the middle ply has a density of about 30 protuberances/cm² in combination with a density of the micro embossing pattern of the first outer ply and second outer ply of about 60 protuberances/cm².

As outlined above, the middle ply is not in registration with the first or second outer plies 14 so that a random configuration of the individual protuberances in the three plies occur.

The ply bonding is performed by using small lamination dots 24 in combination with a small lamination embossing pattern 26 which is applied from the second outer ply 14.

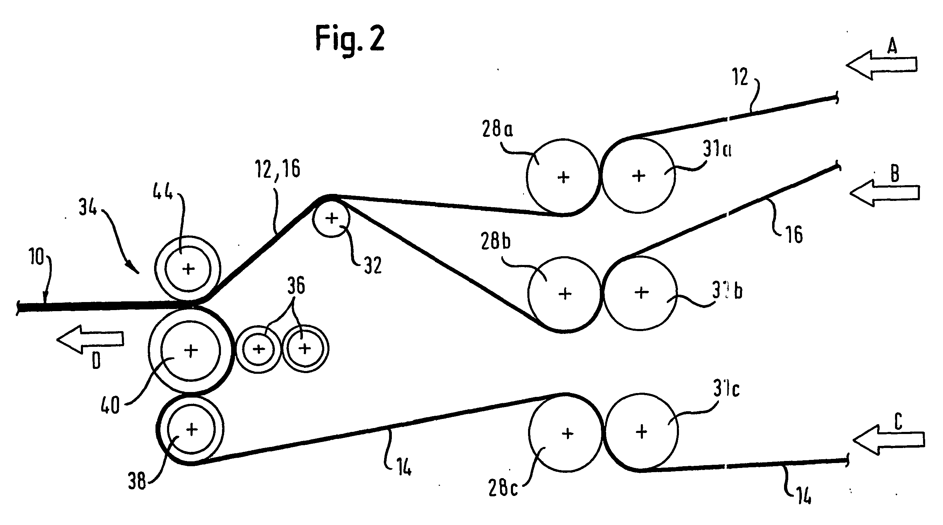

The manufacturing method of the product 10 according to Fig. 1a is schematically described in Fig.2. The first outer ply 12, middle ply 16 and second outer ply 14 are fed to the apparatus in the direction of arrows A, B and C. The first outer ply 12, middle ply 16 and second outer ply 14 are separately embossed between a pair of rollers wherein a usual combination of rollers, like a rubber rollers 31a, 31b, 31c in cooperation with steel rollers 28a, 28b, 28c is used. The tissue plies are embossed in the nip between the corresponding rubber roller and engraved steel roller.

The embossing pattern for the three different plies is different for the product shown in Fig. 1a. Wherein the second outer ply 14 is provided with an micro embossing pattern only, the middle ply is volume embossed with a higher height of the protuberances and a lower density of protuberances per area and the first outer ply is both provided with a micro embossing pattern with geometrically regularly oriented small protuberances and a design pattern to provide the first outer ply with a design distributed in a regular pattern over the surface of the first outer ply 12.

The volume embossed middle ply 16 and the micro embossed and design embossed first outer ply 12 are combined together by means of a roller 32 whereas the second outer ply 14 is separately fed around a rubber anvil roller 38 and through the nip between the rubber anvil roller 38 and a lamination embossing roller 40 with a lamination embossing pattern 26 at a lamination station 34 where a small lamination embossing pattern for the subsequent ply bonding with the first outer ply 12 and middle ply 16 is made. The application of the adhesive by means of the rollers 36 can be carried out using a standard technique.

The second outer ply 14 and the combined first outer ply and middle ply 12, 16 are brought in contact to another and bonded together between a marrying roller 44 and a lamination embossing roller 40 with a lamination embossing patter. The combined three ply tissue product 10 leaves the apparatus in the direction of arrow D.

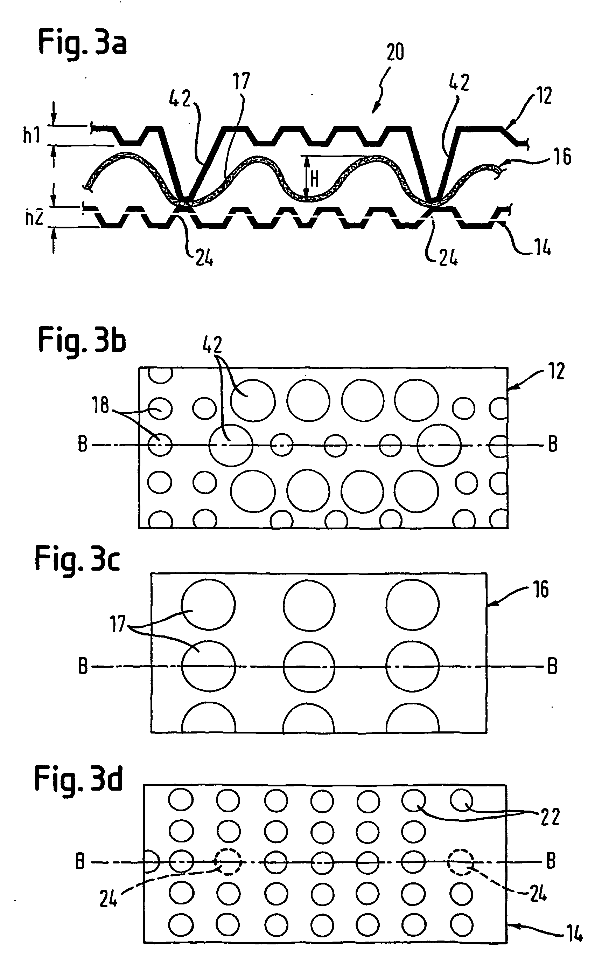

Figs. 3a to 3d relate to a further product according to a slightly different embodiment of the invention. However, the same elements as those shown in Figs. 1a to 1d are given the same reference numerals. The second outer ply 14 according to Fig. 3d is micro embossed corresponding to the micro embossing pattern explained in more detail for the product 10 above. The middle ply 16 according to Fig. 3c is also volume embossed with a big embossing pattern having a density of the protuberances of less than 40 dots/cm². The first outer ply 12 according to Fig. 3b is embossed both with the micro embossing pattern 18 and a design pattern having a height h1. The difference between the product 10 diagrammatically shown in Fig. 1a above and product 20 according to the present embodiment lies in the ply bonding used. There is a separate ply bonding using a deep embossed design 42, e.g. with discrete flower design lamination dots or with deep spots.

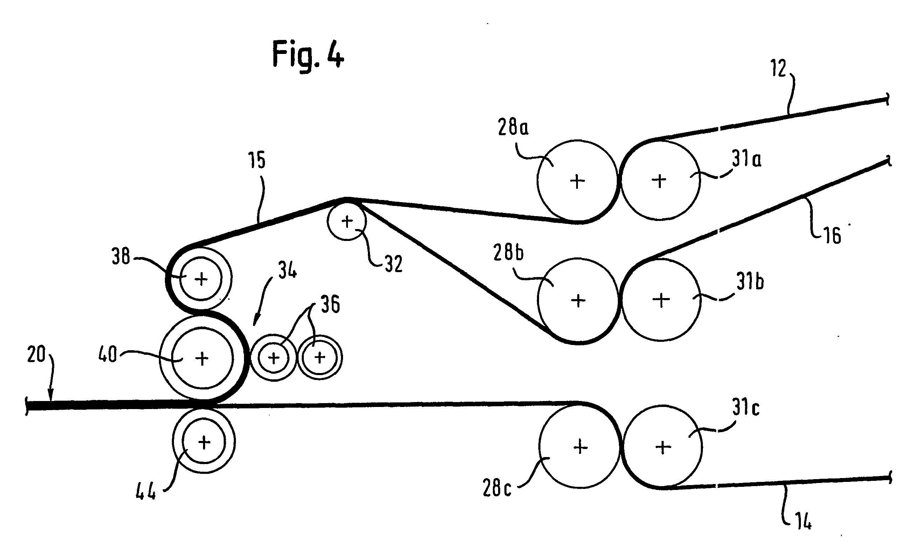

As can be best seen from a comparison between Figs. 2 and 4, the first outer ply 12 and the middle ply 16 are created in a similar way to that already described in connection with Fig. 2. The difference resides in that the pair of rollers 28a and 31a only impart a micro embossing pattern to the outer ply but no graphic pattern additionally to that. The first outer ply and middle ply are combined at the roller 32 to a combined, two-ply web 15 which passes between a rubber roller 38 and a lamination embossing roller 40 with a lamination embossing pattern which are parts of the lamination station 34 also comprising with the lamination rollers 36. In this lamination station the lamination is performed with a desired design, e.g. flowers. Then the two-ply intermediate product 15 is combined with the second outer ply 14 which is brought in contact to the two-ply intermediate product 15 between the spot lamination roller and a further marrying roller 44.

The difference between the products 10 and 20 resides in that in the product 10 according to Fig. 1a, the first outer ply is provided with a micro embossing and a graphic embossing, and the second outer ply is provided with a micro embossing and a lamination pattern, whereas in the product 20 according to Fig. 3a, the second outer ply is only micro embossed and the décor or graphic embossing in the first outer ply 12 is performed by way of the design lamination dots 42.

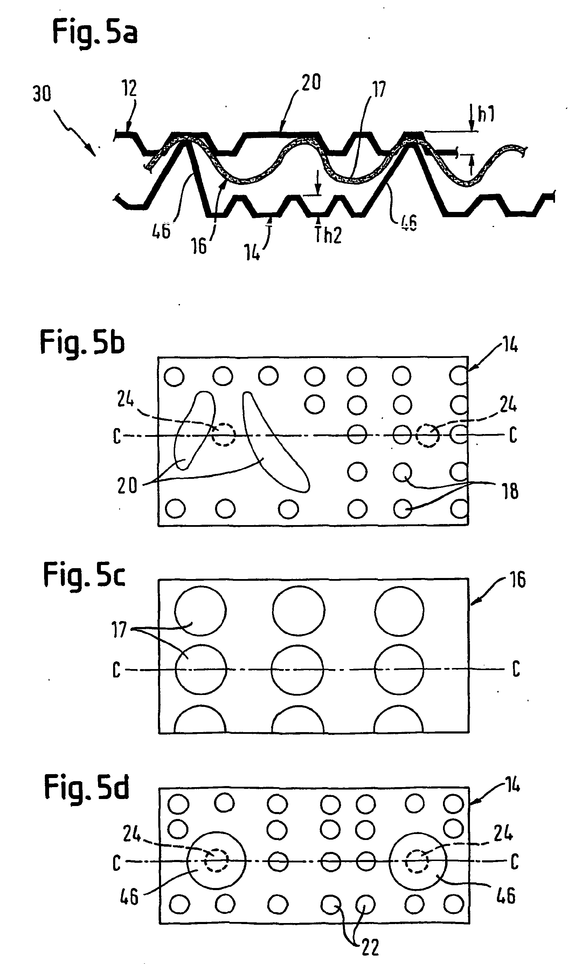

Figs. 5a to 5d show another embodiment of the invention. The first outer ply 12 of the product 30 according to Fig. 5b is provided with a micro embossing pattern 18 and, additionally, a graphic pattern 21 both of which have the height h1. The density of the protuberances of the micro embossing pattern corresponds to that of the products 10 and 20 according to Figs. 1a and 3a.

The second outer ply 14 according to Fig. 5d is also provided with a micro embossing pattern with a height h2 and under the same conditions as outlined above with reference to Figs. 1a to 1d. Same applies to the middle ply 16 according to Fig. 5c which is volume embossed with a big embossing pattern with a density of the protuberances 17 of less than 40 protuberances/cm² and preferably in a range of 30 protuberances/cm². The first outer ply 12 has an additional design embossing pattern 21 which is diagrammatically shown in Fig. 5b by the broad protuberances 21 which can be elongate or dot-like.

The ply bonding of the product 30 is generated without the use of an adhesive. The mechanical ply bonding system by means of which the three plies are bonded together in the regions 46 uses small needles or spikes to press together the three plies.

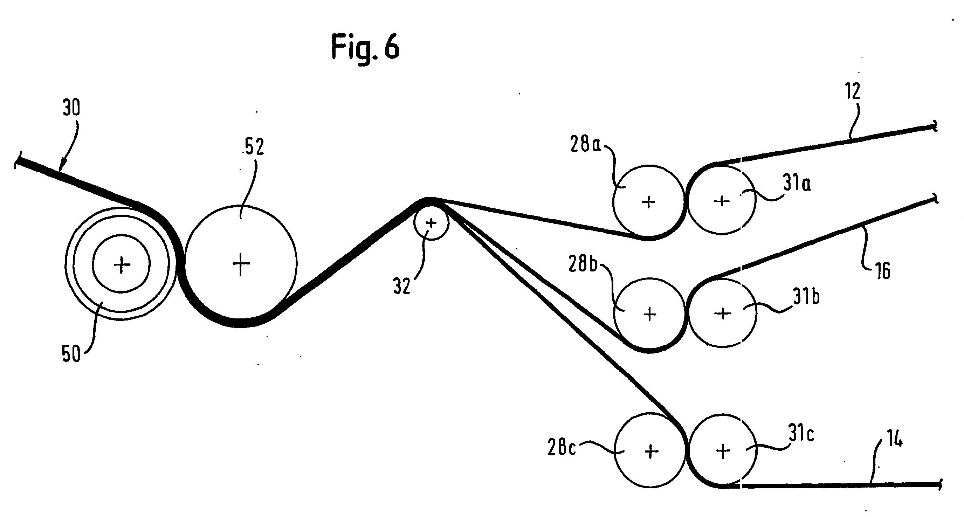

Fig. 6 gives the schematic production process of the three ply product 30 shown in Fig. 5a. The first outer ply 12, middle ply 16 and second outer ply 14 are all provided with a desired embossing pattern. The first outer ply 12 receives a micro embossing pattern and, additionally, a design pattern, both of which are applied in the nip between a steel engraved roller 28a and a rubber roller 31a. The middle ply 16 is volume embossed between a steel roller 28b and a rubber roller 31b and the second outer ply 14 is only provided with a micro embossing pattern by means of a steel roller 28c cooperating with a rubber roller 31c. All three separately embossed plies are combined at the roller 32 and receive the mechanical ply bonding in the nip between a structured steel embossing roller 50 and a corresponding counter roller 52. The counter roller 52 can be a smooth steel roller. The structured steel embossing roller can be provided with needle-like protrusions which press together the combined three-ply tissue paper and generate a mechanical ply bonding to the product 30 before leaving the apparatus.

In all embodiments, the height H of the middle ply can be at least 1.3 times greater than the heights h1, h2 of the first outer ply or second outer ply, respectively, and preferably 1.5 times greater and most preferably 2.0 times greater than the heights h1, h2 of the first and second outer plies.

All above described embodiments have in common that the multi-ply tissue paper product is a combination of micro embossed first and second outer plies in combination with a middle ply which is volume embossed using a big embossing pattern. The three plies are combined in an unregistered way wherein different types of ply bonding and different types of graphic embossing can be used. In general, the micro-embossed outer plies provide softness to the multi-ply product, whereas the volume-embossed middle ply generates bulk to the product.

## Claims

1. Multi-ply tissue paper product (10; 20; 30), comprising:
- at least three structured plies of paper;
- a first outer ply (12) with a first microstructure pattern with first protuberances (18) with a first density of more than 40 protuberances/cm²;
- a second outer ply (14) with a second microstructure pattern with second protuberances (22) with a second density of more than 40 protuberances/cm²;
- at least one middle ply (16) sandwiched between the first outer ply (12) and the second outer ply (14) with a third structure pattern being an embossed pattern with third protuberances (17) with a density of less than 40 protuberances/cm²; wherein
- the first and second outer plies and the at least one middle ply are ply bonded together in a non-registered manner.

2. Multi-ply tissue paper product according to claim 1,
**characterized in that**,
the first microstructure pattern has first protuberances (18) with a first height h1 and the second microstructure pattern has second protuberances (22) with a second height h2; wherein
the protuberances (17) of the third structure pattern have a height H which is at least 1.3, preferably 1.5 times and most preferably 2.0 times greater than h1 and h2, respectively.

3. Multi-ply tissue paper product according to claim 1 or 2, **characterized in that**,
the first outer ply (12) has a fourth structure pattern, preferably embossing pattern with fourth protuberances (21) having essentially the same height as the first protuberances (18) of the first micro structure pattern.

4. Multi-ply tissue paper product according to claim 3, wherein the second outer ply (14) has a fifth structure pattern with fifth protuberances having essentially the same height as the second protuberances of the second microstructure pattern.

5. Multi-ply tissue paper product according to claim 4,
**characterized in that**
the fourth and fifth structure pattern are essentially identical.

6. Multi-ply tissue paper product according to claim 4,
**characterized in that**
the fourth and fifth structure pattern are different to each other.

7. Multi-ply tissue paper product according to any of the claims 3 to 6, wherein the fourth and/or fifth protuberances have an elongate shape.

8. Multi-ply tissue paper product according to any of the claims 3 to 6, wherein the fourth and/or fifth protuberances have a dot-like shape arranged in a way to form an aesthetic pattern.

9. Multi-ply tissue paper product according to any of the preceding claims,
**characterized in that**,
the ply bonding is generated by adhesive lamination using a lamination pattern (24).

10. Multi-ply tissue paper product according to any of the claims 1 to 8,
**characterized in that**,
ply bonding is generated by a mechanical ply bonding technique.

11. Multi-ply tissue paper product according to any of the preceding claims,
**characterized in that**,
at least one of the first and second outer plies is a TAD-paper.

12. Multi-ply tissue paper according to any of claims 1 to 10,
**characterized in that**,
at least one of the first and the second outer plies is micro-embossed.

13. Method of producing a multi-ply tissue paper comprising the steps:
a) a first outer ply (12) with a first microstructure pattern with a density of protuberances (18) of more than 40 protuberances/cm²;
b) structuring a second outer ply (14) with a second microstructure pattern with a density of second protuberances (22) of more than 40 protuberances/cm²;
c) embossing a middle ply (16) with a third structure pattern being an embossing pattern with a density of less than 40 protuberances/cm²; and
d) combining together the three plies in an unregistered way.

14. Method of producing a multi-ply tissue paper according to claim 13, further comprising:
a1) further structuring a design pattern (21) into the first outer ply.

15. Method of producing a multi-ply tissue paper according to claim 13 or 14, further comprising:
b1) further generating, preferably embossing, a design pattern in the second outer ply.

16. Method of producing a multi-ply tissue paper according to claim 13, wherein the step d) comprises:
d1) providing a separate mechanical ply bonding of all three plies using exclusively a mechanic ply bonding technique without the use of adhesive.

17. Method of producing a multi-ply tissue paper according to any of the claims 13 to 15, wherein step d) is further subdivided into
d1) combining the first outer ply (12) and the middle ply (16) to a combined tissue web (15);
d2) applying an adhesive to the combined tissue web (15) ; and
d3) marrying the combined tissue web (15) and the second outer ply (14).

18. Method of producing a multi-ply tissue paper according to claim 17, wherein in step d2) the lamination is provided using a design pattern of lamination dots.

19. Method of producing a multi-ply tissue paper according to any of the claims 13 to 18,
**characterized in that**,
the structuring of at least one of the first outer ply and second outer ply is performed by embossing a micro-embossing pattern.

20. Method of producing a multi-ply tissue paper according to any of the claims 13 to 18,
**characterized in that**,
the structuring of at least one of the first outer ply and second outer ply is performed by a TAD process.

## Patentansprüche

1. Mehrlagiges Tissuepapierprodukt (10; 20; 30) umfassend:
- wenigstens drei strukturierte Papierlagen;
- eine erste Außenlage (12) mit einem ersten mikrostrukturellen Muster mit ersten Erhebungen (18) und einer ersten Dichte von mehr als 40 Erhebungen pro cm²;
- eine zweite Außenlage (14) mit einem zweiten mikrostrukturellen Muster mit zweiten Erhebungen (22) und einer zweiten Dichte von mehr als 40 Erhebungen pro cm²;
- wenigstens eine Mittellage (16), die zwischen der ersten Außenlage (12) und der zweiten Außenlage (14) angeordnet ist und ein drittes Strukturmuster aufweist, bei dem es sich um ein geprägtes Muster mit dritten Erhebungen (17) und einer Dichte von weniger als 40 Erhebungen pro cm² handelt; wobei
- die erste und zweite Außenlage und die wenigstens eine Mittellage auf nicht ausgerichtete Weise miteinander verbunden sind.

2. Mehrlagiges Tissuepapierprodukt nach Anspruch 1, **dadurch gekennzeichnet, dass** das erste mikrostrukturelle Muster erste Erhebungen (18) mit einer ersten Höhe (h1) aufweist und das zweite mikrostrukturelle Muster zweiter Erhebungen (22) mit einer zweiten Höhe (h2) aufweist; wobei die Erhebungen (17) des dritten strukturellen Musters eine Höhe (H) aufweisen, die wenigstens 1,3, vorzugsweise 5 und am meisten bevorzugt 2,0 mal größer ist als h1 bzw. h2.

3. Mehrlagiges Tissuepapierprodukt nach Anspruch 1 oder 2, **dadurch gekennzeichnet, dass** die erste Außenlage (12) ein viertes Strukturmuster, vorzugsweise ein Prägemuster mit vierten Erhebungen (21) aufweist, die im Wesentlichen die gleiche Höhe aufweisen wie die ersten Erhebungen (18) des ersten mikrostrukturellen Musters.

4. Mehrlagiges Tissuepapierprodukt nach Anspruch 3, bei dem die zweite Außenlage (14) ein fünftes Strukturmuster mit fünften Erhebungen mit im Wesentlichen der gleichen Höhe wie die zweiten Erhebungen des zweiten mikrostrukturellen Musters aufweist.

5. Mehrlagiges Tissuepapierprodukt nach Anspruch 4, **dadurch gekennzeichnet, dass** das vierte und fünfte Strukturmuster im Wesentlichen identisch sind.

6. Mehrlagiges Tissuepapierprodukt nach Anspruch 4, **dadurch gekennzeichnet, dass** das vierte und fünfte Strukturmuster unterschiedlich sind.

7. Mehrlagiges Tissuepapierprodukt nach einem der Ansprüche 3-6, bei dem die vierten und/oder fünften Erhebungen eine längliche Form aufweisen.

8. Mehrlagiges Tissuepapierprodukt nach einem der Ansprüche 3-6, bei dem die vierten und/oder fünften Erhebungen eine punktähnliche Form aufweisen und derart angeordnet sind, dass sie ein ästhetisches Muster bilden.

9. Mehrlagiges Tissuepapierprodukt nach einem der vorstehenden Ansprüche, **dadurch gekennzeichnet, dass** die Lagenhaftung durch ein Verbinden mit Klebemitteln erzeugt wird, wobei ein Klebemuster (24) verwendet wird.

10. Mehrlagiges Tissuepapierprodukt nach einem der Ansprüche 1-8, **dadurch gekennzeichnet, dass** die Lagenhaftung durch eine mechanische Lagenhaftungstechnik erzeugt ist.

11. Mehrlagiges Tissuepapierprodukt nach einem der vorstehenden Ansprüche, **dadurch gekennzeichnet, dass** wenigstens die erste oder die zweite Außenlage ein TAD-Papier ist.

12. Mehrlagiges Tissuepapierprodukt nach einem der Ansprüche 1-10, **dadurch gekennzeichnet, dass** wenigstens die erste oder die zweite Außenlage mit einer Mikroprägung versehen ist.

13. Verfahren zum Herstellen eines mehrlagigen Tissuepapiers umfassend die Schritte:
(a) Strukturieren einer ersten Außenlage (12) mit einem ersten mikrostrukturellen Muster mit einer Dichte an Erhebungen (18) von mehr als 40 Erhebungen pro cm² ;
(b) Strukturieren einer zweiten Außenlage (14) mit einem zweiten mikrostrukturellen Muster mit einer Dichte an zweiten Erhebungen (22) von mehr als 40 Erhebungen pro cm²;
(c) Prägen einer Mittellage (16) mit einem dritten strukturellen Muster, bei dem es sich um ein Prägemuster mit einer Dichte von weniger als 40 Erhebungen pro cm² handelt; und
(d) Kombinieren der drei Lagen in nicht ausgerichteter Weise.

14. Verfahren zum Herstellen eines mehrlagigen Tissuepapiers nach Anspruch 13, ferner umfassend:
(a1) ferner Strukturieren der ersten Außenlage mit einem Designmuster (21).

15. Verfahren zum Herstellen eines mehrlagigen Tissuepapiers nach Anspruch 13 oder 14, ferner umfassend:
(b1) ferner Erzeugen, vorzugsweise Prägen, eines Designmusters in die zweite Außenlage.

16. Verfahren zum Herstellen eines mehrlagigen Tissuepapiers nach Anspruch 13, wobei der Schritt (d) umfasst:
(d1) Vorsehen einer separaten mechanischen Lagenhaftung aller drei Lagen ausschließlich unter Verwendung einer mechanischen Lagenhaftungstechnik ohne die Verwendung von Klebemittel.

17. Verfahren zum Herstellen eines mehrlagigen Tissuepapiers nach einem der Ansprüche 13-15, wobei der Schritt (d) ferner in die folgenden Schritte unterteilt ist:
(d1) Kombinieren der ersten Außenlagen (12) und der Mittellage (16) zu einer kombinierten Tissuebahn (15) ;
(d2) Aufbringen eines Klebemittels auf die kombinierte Tissuebahn (15); und
(d3) Verheiraten der kombinierten Tissuebahn (15) und der zweiten Außenlage (14).

18. Verfahren zum Herstellen eines mehrlagigen Tissuepapiers nach Anspruch 17, wobei im Schritt (d2) die Lamination unter Verwendung eines Designmusters aus Laminationspunkten vorgesehen wird.

19. Verfahren zum Herstellen eines mehrlagigen Tissuepapiers nach Anspruch nach einem der Ansprüche 13-18, **dadurch gekennzeichnet, dass** das Strukturieren wenigstens der ersten Außenlage oder der zweiten Außenlage durch Einprägen eines Mikroprägemusters erfolgt.

20. Verfahren zum Herstellen eines mehrlagigen Tissuepapiers nach einem der Ansprüche 13-18, **dadurch gekennzeichnet, dass** das Strukturieren wenigstens der ersten Außenlage oder der zweiten Außenlage durch ein TAD-Verfahren erfolgt.

## Revendications

1. Produit du type papier absorbant multicouche (10 ; 20 ; 30) comprenant :
- au moins trois couches de papier absorbant structurées ;
- une première couche extérieure (12) présentant un premier motif microstructuré et comportant des premières protubérances (18) dont la densité, dite première densité, est supérieure à 40 protubérances/cm² ;
- une deuxième couche extérieure (14) présentant un deuxième motif microstructuré comportant des deuxièmes protubérances (22) dont la densité, dite deuxième densité, est supérieure à 40 protubérances/cm² ;
- au moins une couche médiane (16) disposée en sandwich entre la première couche extérieure (12) et la deuxième couche extérieure (14) présentant un troisième motif structuré qui est un motif gaufré comportant des troisièmes protubérances (17) dont la densité est inférieure à 40 protubérances/cm² ;
dans lequel les première et deuxième couches extérieures et au moins une couche médiane sont liées ensemble sans qu'elles se correspondent exactement.

2. Produit du type papier absorbant multicouche selon la revendication 1, **caractérisé en ce que**,
le premier motif microstructuré comporte des premières protubérances (18) d'une première hauteur h1 et le deuxième motif microstructuré comporte des deuxièmes protubérances (22) d'une deuxième hauteur h2 ; les protubérances (17) du troisième motif structuré ayant une hauteur H qui est au moins 1,3 , de préférence 1,5 et le plus préférablement 2,0 fois plus grande que h1 et respectivement h2.

3. Produit du type papier absorbant multicouche selon la revendication 1 ou 2, **caractérisé en ce que**
la première couche extérieure (12) comporte un quatrième motif structuré, de préférence un motif gaufré doté de quatrièmes protubérances (21) ayant sensiblement la même hauteur que les premières protubérances (18) du premier motif microstrucuré.

4. Produit du type papier absorbant multicouche selon la revendication 3, dans lequel la deuxième couche extérieure (14) comporte un cinquième motif structuré doté de cinquièmes protubérances ayant sensiblement la même hauteur que les deuxièmes protubérances du deuxième motif microstructuré.

5. Produit du type papier absorbant multicouche selon la revendication 4, **caractérisé en ce que** les quatrième et cinquième motifs structurés sont sensiblement identiques.

6. Produit du type papier absorbant multicouche selon la revendication 4, **caractérisé en ce que**
les quatrième et cinquième motifs structurés sont différents l'un de l'autre.

7. Produit du type papier absorbant multicouche selon l'une quelconque des revendications 3 à 6, dans lequel les quatrièmes et les cinquièmes protubérances ont une forme oblongue.

8. Produit du type papier absorbant multicouche selon l'une quelconque des revendications 3 à 6, dans lequel les quatrièmes et/ou les cinquièmes protubérances ont une forme ponctuelle agencée de manière à former un motif esthétique.

9. Produit du type papier absorbant multicouche selon l'une quelconque des revendications qui précèdent,
**caractérisé en ce que**
la liaison des couches est obtenue par lamellage employant un adhésif, en utilisant un motif de lamellage (24).

10. Produit du type papier absorbant multicouche selon l'une quelconque des revendications 1 à 8,
**caractérisé en ce que**
la liaison des couches est obtenue selon une technique de liaison mécanique des couches.

11. Produit du type papier absorbant multicouche selon l'une quelconque des revendications qui précèdent,
**caractérisé en ce qu'**
au moins une des première et deuxième couches extérieures est un papier du type séché par passage d'air.

12. Produit du type papier absorbant multicouche selon l'une quelconque des revendications 1 à 10,
**caractérisé en ce qu'**
au moins une des première et deuxième couches extérieures est micro-gaufrée.

13. Procédé de fabrication d'un papier absorbant multicouche comprenant les étapes consistant à
(a) partir d'une première couche extérieure (12) comportant un premier motif microstructuré doté d'une densité de protubérances (18) supérieure à 40 protubérances/cm² ;
(b) structurer une deuxième couche extérieure (14) avec un deuxième motif microstructuré doté d'une densité de deuxièmes protubérances (22) supérieure à 40 protubérances/cm² ;
(c) gaufrer une couche médiane (16) avec un troisième motif structuré qui est un motif de gaufrage d'une densité inférieure à 40 protubérances/cm² ; et
(d) combiner les trois couches sans qu'elles se correspondent exactement.

14. Procédé de fabrication d'un papier absorbant multicouche selon la revendication 13, comprenant en plus :
a1) le fait de structurer en outre un motif constituant un dessin (21) dans la première couche extérieure.

15. Procédé de fabrication d'un papier absorbant multicouche selon la revendication 13 ou 14, comprenant de plus :
b1) le fait de réaliser, de préférence en effectuant un gaufrage, un motif constituant un dessin, dans la deuxième couche extérieure.

16. Procédé de fabrication d'un papier absorbant multicouche selon la revendication 13, dans lequel l'étape d) comprend :
d1) le fait de réaliser une liaison mécanique séparée des trois couches en utilisant exclusivement une technique de liaison mécanique de couches, sans utilisation d'adhésif.

17. Procédé de fabrication d'un papier absorbant multicouche selon l'une quelconque des revendications 13 à 15, dans lequel l'étape d) est en outre subdivisée en
d1) combinaison de la première couche extérieure (12) et de la couche médiane (16) pour former une bande (15) de papiers absorbants combinés ;
d2) l'application d'un adhésif sur la bande (15) de papiers absorbants combinés ; et
d3) l'assemblage de la bande (15) de papiers absorbants combinés et de la deuxième couche extérieure (14).

18. Procédé de fabrication d'un papier absorbant multicouche selon la revendication 17, dans lequel à l'étape d2) le lamellage est exécuté en utilisant un motif constituant un dessin formé de points de lamellage.

19. Procédé de fabrication d'un papier absorbant multicouche selon l'une quelconque des revendications 13 à 18 ;
**caractérisé en ce que**
la structuration d'au moins une des première et deuxième couches extérieures est exécutée par gaufrage d'un motif micro-gaufré.

20. Procédé de fabrication d'un papier absorbant multicouche selon l'une quelconque des revendications 13 à 18 ;
**caractérisé en ce que**
la structuration d'au moins une des première et deuxième couches extérieures est réalisée selon un procédé de séchage par passage d'air.
